# EUROPEAN PATENT SPECIFICATION

(11) **EP 1 980 661 B1**
(45) Date of publication and mention of the grant of the patent: **01.12.2010**
(21) Application number: 08103472.0
(22) Date of filing: 10.04.2008
(51) Int. Cl.: D06F 37/20, D06F 37/22

(54) **Shock absorber sleeve and pin**
Dorn und Hülse zur Dämpfung
Broche et douille pour l'absorption de chocs

(30) Priority: 12.04.2007 TR 200702472
(43) Date of publication of application: 15.10.2008
(73) Proprietor: Vestel Beyaz Esya Sanayi Ve Ticaret A.S., 45030 Manisa (TR)
(72) Inventor: Telci, Yetkin, 35030 Bornova, Izmir (TR); Ozkan, Semih Vestel Beyaz Esya Sanayi Ve Ticaret A.S., 35140 Izmir (TR)
(74) Representative: Cayli, Hülya

(56) References cited:
- WO-A-2007/013021
- DE-A1- 3 511 125
- DE-A1-102005 008 239

## Description

### Technical Field

This invention relates to the connection form of the shock absorber with the body and the tub which is used to dampen the vibration created by the turning motion of the drum inside the washing machines.

### Prior Art

In the state of the art, as known from DE-A-10 2005 008 239 A1 the shock absorbers used in the washing machines are connected to the body and tub of the machine by using shock absorber pins. There are circular shaped holes on both ends of the shock absorber. Said shock absorber pin is inserted into these holes and into circular shaped holes on the body of the machine and the tub associated with these. The pins are subject to wearing since they turn in these holes. Besides they also cause wearing of the holes. That is why shock absorber sleeves are used as the wear element between the holes and the pins. When the sleeves that are placed between the pin and the hole are subject to wear, the space between the pin and the hole gets larger. In such a case, the working space between the pin and the hole is brought back to the desired level by changing the sleeves. Shock absorber sleeves and pins are in the form of hollow cylinders and there are recesses parallel to the main axis of them from end to end on sides. These recesses allow the diameter of the pin and the sleeve to contract a little bit when being inserted into the holes. By this way the pin and the sleeve can be inserted into the desired hole more easily. But while the pin and the sleeve are turning with respect to each other, the recesses on them come across occasionally and the edges of the recesses may wedge. This situation causes undesired sounds to come from the shock absorber pin and sleeve while working.

### Brief Description of the Invention

In the state of the art of the abovementioned technique, since the recesses on the shock absorber sleeve and the pin are formed parallel to the main axis of the sleeve and the pin, they always contact linearly. In this invention, the recesses on the shock absorber sleeve and the pin contact each other on a point by placing them at an angle with respect to the central axis of the pin and the sleeve or with respect to each other. This prevents the recesses slide passing on each other from generating undesired sounds.

### The Aim of Invention

The goal of this invention is to make the edges of the recesses contact on a point while working by placing the recesses on the shock absorber pins and sleeves used in the washing machines with an angle.

### Brief Description of the Figures

The representative applications related to the shock absorber sleeve and the pin of this invention are illustrated in the attached figures wherein
Figure 1 is the front view of the interior part of the washing machine.
Figure 2 is the side view of the shock absorber connection.
Figure 3 is the perspective view of the shock absorber pin and sleeve of the prior art before inserted into shock absorber holes.
Figure 4 is the perspective view of the shock absorber pin and sleeve of the prior art as assembled together.
Figure 5 is another perspective view of the shock absorber pin and sleeve of the prior art as assembled together.
Figure 6 is the perspective view of the shock absorber pin and sleeve of this invention as assembled together.
Figure 7 is another perspective view of the shock absorber pin and sleeve of this invention as assembled together.

The parts in the figures are each assigned a number and the descriptions of these numbers are given below.

Washing machine (A)
Body of the machine (1)
Tub (2)
Shock absorber (3)
Sleeve (4)
Pin (5)
Recess (4a)
Recess (5a)
Hole (6)
Sleeve (4')
Pin (5')
Recess (4a')
Recess (5a')

### Detailed Description of the Invention

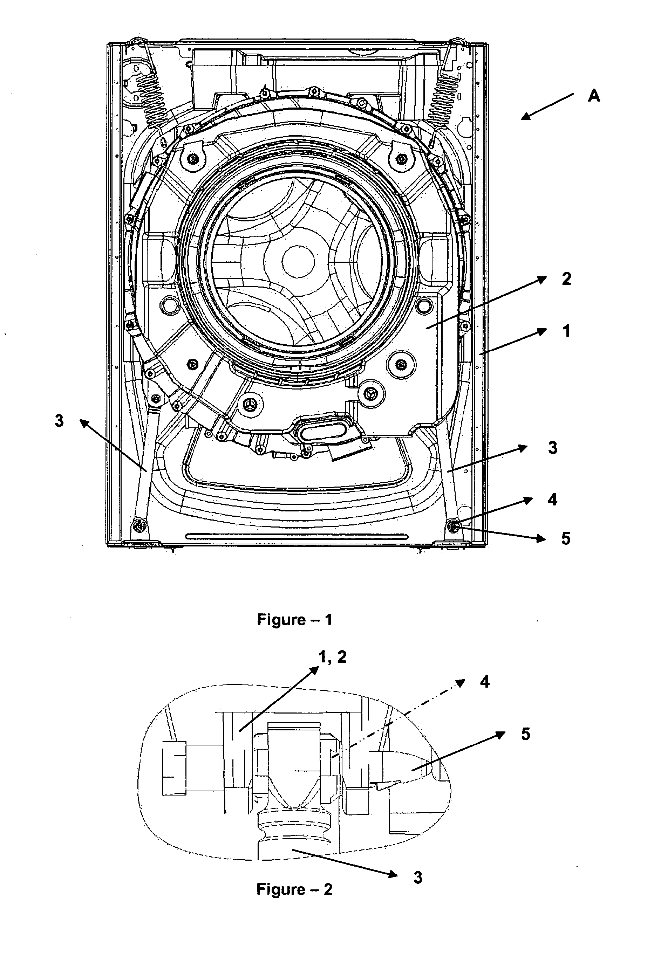

The washing machine (A) of this invention illustrated in Figure 1 comprises; at least one shock absorber (3) connected to the body (1) of the machine and the tub (2) inside the body; at least one shock absorber sleeve (4) and pin (5) used on the connection of each of the shock absorbers (3) with the body (1) and the tub (2). In Figure 2, the side view of the connection of the shock absorber (3) with the body (1) of the machine and the tub (2) is illustrated. As illustrated in this figure, the shock absorber (3) is connected to the holes on the body (1) and the tub (2) by the help of the sleeve (4) and the pin (5). The pin (5) and the sleeve (4) are hollow cylindrical parts. There is one recess on side surfaces of both parts (4, 5) from end to end.

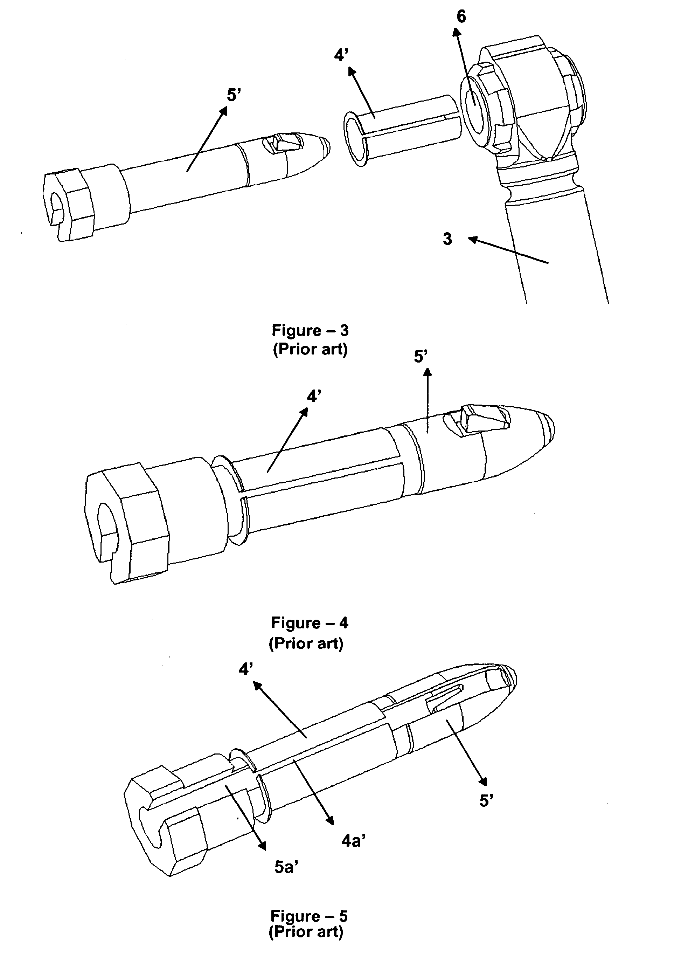

In Figure 3, the perspective view of the shock absorber pin (5') and sleeve (4') of the prior art before inserted into shock absorber holes (6) is illustrated. The parts of the pin (5') and the sleeve (4') inserted into the hole (6) are cylindrical. During the installation the pin (5') is inserted into the sleeve (4') and then they are inserted into the shock absorber hole (6) together. In Figures 4 and 5 the perspective view of the assembled shock absorber pin (5') and the sleeve (4') is illustrated. As illustrated in these figures, in the prior art, the recess (4a') on the sleeve (4') and the recess (5a') on the pin (5') are parallel to each other. When the cylindrical forms of these two parts (4', 5') are considered, these recesses (4a', 5a') are also parallel to the central axis of these said parts (4' 5'). Therefore, the edges of the recesses (4a', 5a') have a linear contact while sliding pass on each other at usage. This leads to wedging and undesired sounds to be generated. Hence, the shock absorber sleeve (4) and the pin (5) of this invention have been developed.

The connection style of the sleeve (4) and the pin (5) used in the washing machine (A) of this invention is the same as the connection style of the sleeve (4') and the pin (5') used in the prior art. The details of the sleeve (4) and the pin (5) used in the washing machine (A) of this invention is described below.

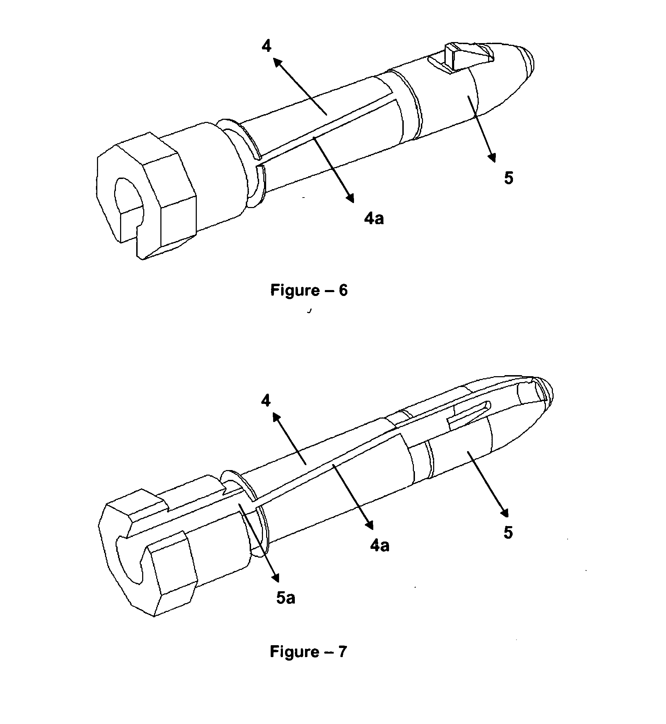

As illustrated in Figures 6 and 7, the recess (4a) on the sleeve (4) is formed at an angel in order for it to have a point contact with the recess (5a) on the pin (5). In other words, the recess (4a) on the cylindrically formed sleeve (4) is angularly formed with respect to the central axis of the sleeve (4). In this example, the recess (5a) on the pin (5) is held parallel with respect to the central axis of the pin (5). When the pin (5) is inserted into the sleeve (4), it can be seen that there is an angle between these two recesses (4a' 5a) and the edges of the recesses (4a, 5a) have a point contact with each other.

As an alternative embodiment of the invention, while the recess (4a) on the sleeve (4) is being held parallel to the central axis of the sleeve (4), the recess (5a) on the pin (5) may be angularly formed with respect to the central axis of the pin (5). Or, by forming both recesses (4a, 5a) angularly with respect to said central axes and each other, said point contact of the recess (4a, 5a) edges may be provided.

During the movement of the sleeve (4) and the pin (5) with respect to each other, the point contact instead of linear contact on the edges of the recesses (4a, 5a) causes to less wedging and less undesired sounds.

## Claims

1. The washing machine (A) comprising; at least one shock absorber (3) connected to the body (1) of the machine and the tub (2) inside the body; at least one shock absorber sleeve (4) and pin (5) that are used on the connection of each of the shock absorbers (3) with the body (1) and the tub (2), that are hollow cylinders, that have a recess (4a, 5a) on their sides from end to end, and that are inserted into the holes (6) one within the other on the ends of the shock absorber (3); which is **characterized in that** when the pin (5) is inserted into the sleeve (4), the edge of the recess (4a) on the sleeve (4) is angularly placed with respect to the edge of the recess (5a) on the pin (5).

2. A washing machine (A) according to Claim 1 which is **characterized in that** the recess (4a) on the sleeve (4) is angularly formed with respect to the central axis of the sleeve (4).

3. A washing machine (A) according to Claim 1 which is **characterized in that** the recess (5a) on the pin (5) is angularly formed with respect to the central axis of the pin (5).

## Patentansprüche

1. Waschmaschine (A), die Folgendes aufweist: mindestens einen Stoßdämpfer (3), der mit dem Korpus (1) der Maschine und der Wanne (2) im Inneren des Korpus verbunden ist; mindestens eine Stofldämpfermuffe (4) und mindestens einen Stoßdämpferzapfen (5), die an der Verbindung jedes der Stoßdämpfer (3) mit dem Korpus (1) und der Wanne (2) verwendet werden, bei denen es s ch um Hohlzylinder handelt, die eine von Ende zu Ende gehende seitliche Ausnehmung (4a, 5a) haben, und die ineinander befindlich in Öffnungen (6) an den Enden des Stoßdämpfers (3) eingesteckt sind; die **dadurch gekennzeichnet ist, dass,** wenn der Zapfen (5) in die Muffe (4) eingesteckt ist, der Rand der Ausnehmung (4a) an der Muffe (4) im Hinblick auf den Rand der Ausnehmung (5a) am Zapfen (5) in einem Winkel angeordnet ist.

2. Waschmaschine (A) nach Anspruch 1, die **dadurch gekennzeichnet ist, dass** die Ausnehmung (4a) an der Muffe (4) im Hinblick auf die Mittelachse der Muffe (4) schräg verlaufend geformt ist.

3. Waschmaschine (A) nach Anspruch 1, die **dadurch gekennzeichnet ist, dass** die Ausnehmung (5a) am Zapfen (5) im Hinblick auf die Mittelachse des Zapfens (5) schräg verlaufend geformt ist.

## Revendications

1. Machine à laver (A) comprenant: au moins un amortisseur (3) raccordé au corps (1) de la machine et à la cuve (2) à l'intérieur du corps ; au moins un manchon (4) d'amortisseur et une broche (5) qui sont utilisés sur le raccordement de chacun des amortisseurs (3) avec le corps (1) et la cuve (2) qui sont des cylindres creux, qui ont un évidement (4a, 5a) sur leurs côtés d'une extrémité à l'autre, et qui sont insérés dans les trous (6) l'un à l'intérieur de l'autre sur les extrémités de l'amortisseur (3); qui est **caractérisée en ce que** lorsque la broche (5) est insérée dans le manchon (4), le bord de l'évidement (4a) sur le manchon (4) est placé de manière angulaire par rapport au bord de l'évidement (5a) sur la broche (5).

2. Machine à laver (A) selon la revendication 1, qui est **caractérisée en ce que** l'évidement (4a) sur le manchon (4) est formé de manière angulaire par rapport à l'axe central du manchon (4).

3. Machine à laver (A) selon la revendication 1, qui est **caractérisée en ce que** l'évidement (5a) sur la broche (5) est formé de manière angulaire par rapport à l'axe central de la broche (5).
